**Europäisches Patentamt**

**European Patent Office**

**Office européen des brevets**

(19)

(11) Numéro de publication: **0 303 531**
**A2**

# DEMANDE DE BREVET EUROPEEN

(12)

(21) Numéro de dépôt: **88402027.2**

(22) Date de dépôt: **03.08.88**

(51) Int. Cl.⁴: **B 62 M 9/08**

(30) Priorité: **11.08.87 CH 3078/87**

(43) Date de publication de la demande:
**15.02.89 Bulletin 89/07**

(84) Etats contractants désignés:
**BE CH DE ES FR GB IT LI LU NL**

(71) Demandeur: **Sté. Look**
**Rue de la Pique**
**F-58000 Nevers (FR)**

(72) Inventeur: **Bregnard, Jean-Pierre**
**10, rue des Fleurs**
**CH-2300 La Chaux de Fonds (CH)**

(74) Mandataire: **Tony-Durand, Serge**
**Cabinet Tony-Durand 77, rue Boissière**
**F-75116 Paris (FR)**

(54) **Variateur de vitesse.**

(57) Ce variateur de vitesse comprend deux éléments (1, 2) -respectivement mené et menant- montés rotatifs autour de deux axes parallèles dont l'un est déplaçable par rapport à l'autre. Ces éléments sont reliés l'un à l'autre par des organes d'accouplement unidirectionnels consistant chacun en un plot (16) apte à se coincer sur une piste circulaire (17), ou dans une gorge également circulaire, prévue sur l'un des éléments rotatifs (2) de transmission. Ce plot est monté articulé sur un coulisseau (18) lui-même monté coulissant dans une fente ou rainure diamétrale (19) ménagée dans l'autre élément rotatif (1) de transmission. L'agencement est tel que sous l'effet de la rotation de l'élément menant les plots d'accouplement (16) viennent l'un après l'autre, à tour de rôle, en position de coincement. Par modification de l'excentrement des axes des deux éléments rotatifs (1 et 2), il est possible de faire varier le rapport de transmission mécanique de façon continue.

Ce variateur peut être utilisé dans de nombreux dispositifs mécaniques de transmission de force, notamment sur des cycles, des véhicules à moteur, des machines, etc.

Fig.1

EP 0 303 531 A2

**Description**

**"Variateur de vitesse"**

La présente invention est relative aux variateurs de vitesse permettant une infinité de rapports de vitesse entre deux arbres rotatifs différents, et ce sur une plage plus ou moins large. De tels variateurs de vitesse sont susceptibles de très nombreuses applications. Ainsi ils peuvent être utilisés sur des véhicules à moteur ou sur des cycles, ou bien encore sur des machines ou dispositifs mécaniques quelconques.

Plus précisément, l'invention concerne les variateurs de vitesse du type comprenant deux éléments -respectivement menant et mené- montés rotatifs autour de deux axes parallèles dont l'un est déplaçable par rapport à l'autre, et qui sont reliés l'un à l'autre par des organes d'accouplement unidirectionnels aptes à agir l'un après l'autre à tour de rôle, lesquels sont portés par l'un des éléments rotatifs de transmission, tout en étant susceptibles d'être plus ou moins écartés de l'axe de celui-ci suivant l'excentrement de cet axe par rapport à l'autre. Dans les variateurs de ce genre, il est ainsi possible de faire varier le rapport de transmission de façon continue en modifiant l'excentrement de l'un des éléments rotatifs de transmission par rapport à l'autre.

Le document EP 208.473 décrit un variateur de vitesse de ce type. Dans celui-ci, l'un des éléments rotatifs de transmission porte une série de bras articulés dont les extrémités constituent des cliquets destinés à venir en prise avec une roue à rochet comportant une denture intérieure. La modification de l'excentrement de l'un des éléments rotatifs par rapport à l'autre entraîne une variation de la position angulaire des bras d'accouplement, et par suite une variation du rapport de transmission.

Cependant cette solution présente un certain nombre d'inconvénients. L'un de ceux-ci réside dans le fait que l'accouplement entre les deux éléments rotatifs de transmission n'a lieu que lorsque le cliquet en service est engagé au fond d'un intervalle entre deux dents de la roue à rochet. Par ailleurs, cette solution ne présente pas une résistance mécanique pleinement satisfaisante car les dents de la roue à rochet sont amenées à encaisser des efforts extrêmement importants.

C'est pourquoi la présente invention a pour objet un variateur qui est conçu de façon à éliminer ces inconvénients.

A cet effet ce variateur, du type rappelé précédemment, est caractérisé en ce que chacun des organes unidirectionnels d'accouplement consiste en un plot apte à se coincer sur une piste circulaire, ou dans une gorge également circulaire, prévue sur l'un des éléments rotatifs de transmission, ce plot étant monté articulé sur un coulisseau lui-même monté coulissant dans une fente ou rainure diamétrale ménagée dans l'autre élément rotatif de transmission, l'agencement étant tel que sous l'effet de la rotation de l'élément menant les plots d'accouplement viennent l'un après l'autre, à tour de rôle, en position de coincement. Ainsi, la venue en prise d'un autre organe d'accouplement avec l'élément rotatif en regard s'effectue en un point quelconque de la piste ou de la gorge circulaire de celui-ci dès que se produit le coincement de cet organe. Par ailleurs, l'agencement prévu assure une résistance mécanique pleinement satisfaisante car l'accouplement s'effectue par coincement sur une surface de contact relativement importante.

Selon une autre caractéristique du présent variateur, chacun des plots unidirectionnels de coincement s'articule sur le coulisseau correspondant par l'intermédiaire d'une biellette d'accouplement. La présence de cette biellette permet de compenser les différences des rayons d'action et de minimiser ainsi les frottements se produisant en l'absence d'une telle biellette.

Dans une forme de réalisation avantageuse du présent variateur, l'élément rotatif de transmission, qui comporte une piste ou gorge circulaire de réception des plots de coincement, consiste en une couronne montée rotative autour d'un noyau circulaire auquel est attelé un moyen d'actionnement, par exemple un câble de traction, permettant de provoquer l'excentration de ce noyau, et par suite de la couronne rotative par rapport à l'axe de l'autre élément rotatif de la transmission.

Cependant d'autres particularités et avantages du variateur de vitesse selon l'invention apparaîtront au cours de la description suivante. Celle-ci concerne, à simple titre d'exemple, un variateur équipant une bicyclette. Mais encore une fois, ce variateur pourrait donner lieu à toute autre application.

La présente description est donnée en référence au dessin annexé à titre indicatif, et sur lequel:

La figure 1 est une vue en perspective éclatée des principales pièces constitutives d'un variateur de vitesse selon l'invention.

La figure 2 est une vue en élévation du plateau rotatif de ce variateur, et ce selon les flèches II-II de la figure 1.

La figure 3 est une vue en coupe axiale du présent variateur.

La figure 4 en est une vue en élévation selon les flèches IV-IV de la figure 3.

La figure 5 est une vue de détail de l'un des plots de coincement.

La figure 6 est une vue similaire à la figure 2, mais qui représente une variante de réalisation dans laquelle chaque plot de coincement s'articule sur le coulisseau correspondant par l'intermédiaire d'une biellette d'accouplement.

La figure 7 représente l'un des plots de coincement prévus dans cette variante.

La figure 8 est une vue partielle en coupe axiale de cette variante.

La figure 9 est une vue en coupe axiale d'une forme de réalisation particulière du variateur de vitesse selon l'invention.

La figure 10 est une vue en élévation de face du plateau rotatif faisant partie de ce variateur.

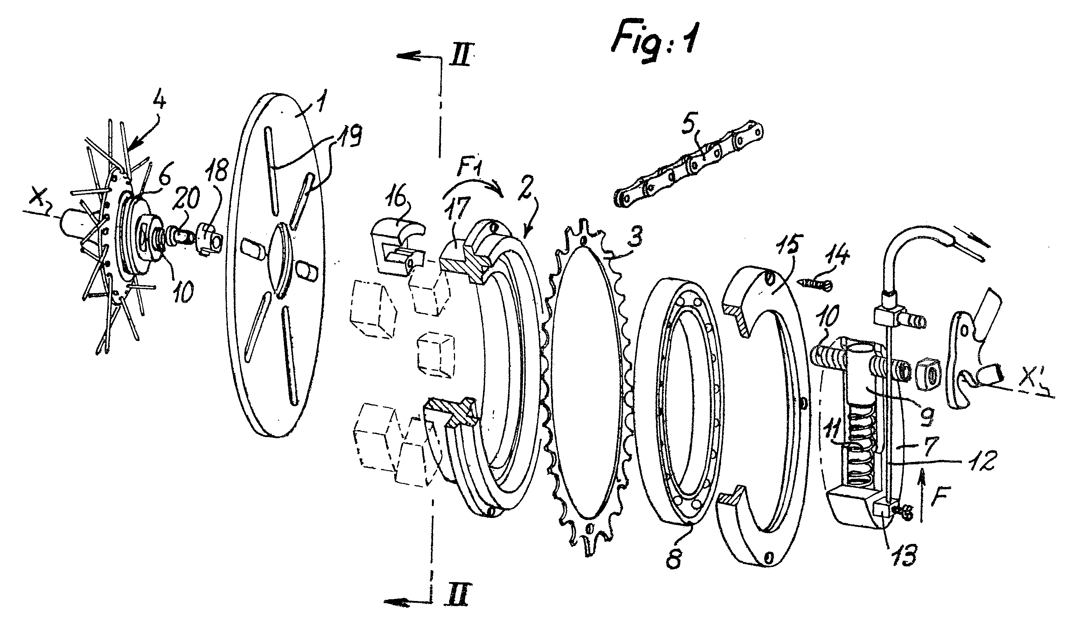

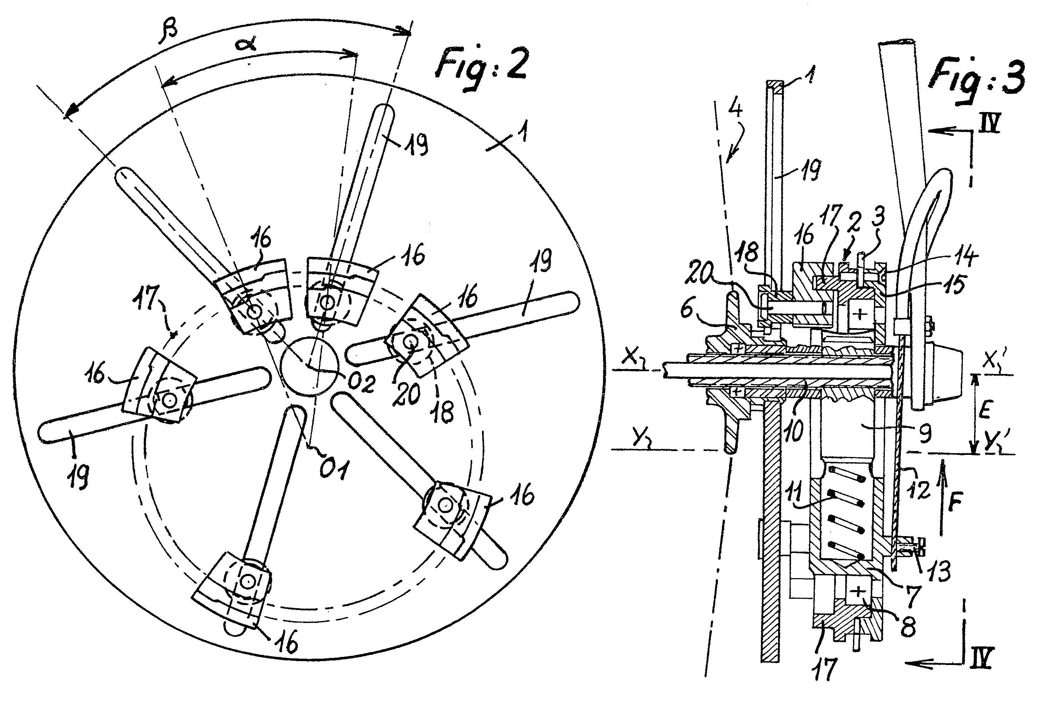

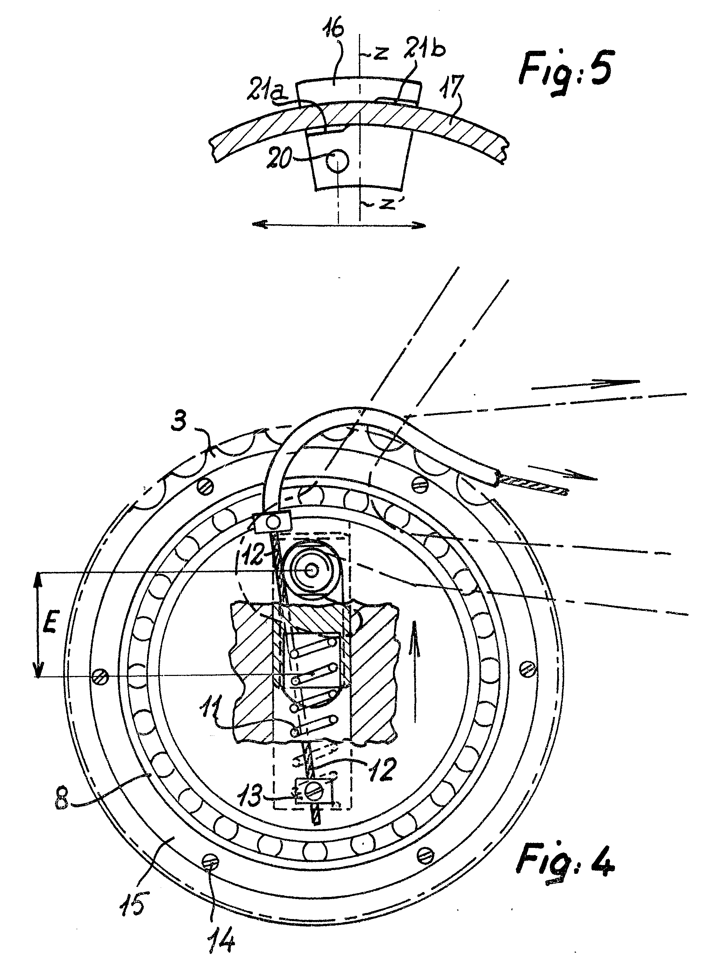

Ainsi qu'il a déjà été indiqué, le variateur représenté à titre d'exemple sur les figures 1 à 5 équipe la roue arrière d'une bicyclette.

Les éléments rotatifs -mené et menant- de ce variateur sont constitués respectivement par un plateau circulaire 1 et une couronne 2, sur laquelle est fixé le pignon 3 d'entraînement de la roue arrière correspondante 4, la chaîne motrice 5 étant disposée sur ce pignon. La fixation du pignon 3 sur la couronne 2 est réalisée par une série de vis 14 qui assurent également celle d'une bague externe 15. Quant au plateau rotatif 1, il est fixé, par vissage ou autre moyen, sur le moyeu 6 de la roue correspondante 4. Ainsi ce plateau est accouplé en rotation avec ce moyeu et il tourne autour de l'axe X-X' de la roue.

La couronne 2 est montée rotative autour d'un noyau 7 de contour circulaire, et ce avec interposition d'un roulement annulaire 8. Ainsi l'axe Y-Y' de ce noyau constitue l'axe de rotation de cette couronne. Or cet axe, qui est parallèle à l'axe X-X' de la roue, est susceptible d'être déplacé en translation par rapport à celui-ci pour provoquer un excentrement entre les deux éléments rotatifs 1 et 2 du variateur et pour faire varier à volonté cet excentrement.

A cet effet le noyau 7 est monté coulissant sur une tige de guidage 9 rapportée à angle droit sur l'axe 10 de la roue. Un ressort à boudin 11 est interposé entre l'extrémité de cette tige 9 et le fond du logement prévu pour celle-ci à l'intérieur du noyau 7. Ainsi ce ressort tend à maintenir, ou rappeler, le noyau 7 dans une position pour laquelle son axe Y-Y' présente un écartement maximum E par rapport à l'axe X-X' de la roue. Cependant un câble 12 de traction, attaché en 13 sur le noyau 7, permet de déplacer celui-ci dans le sens de la flèche F, à l'encontre de l'action du ressort 11, pour réduire l'excentrement entre les deux axes X-X' et Y-Y' ce câble pouvant être actionné à distance par le cycliste de la même façon qu'un câble de dérailleur.

Les organes unidirectionnels d'accouplement prévus entre les deux éléments rotatifs de transmission 1 et 2 consistent en des plots de coincement 16. Chacun de ces plots affecte la forme générale d'un cavalier de section en forme de U dont les parois sont incurvées. Chacun de ces cavaliers est placé à cheval sur une piste circulaire 17 portée par la face de la couronne 2 qui est tournée vers le plateau 1.

Dans l'exemple représenté, il est ainsi prévu six plots de coincement 16 tous engagés sur la piste circulaire 17. Chacun de ces plots est monté articulé sur un coulisseau 18 qui est lui-même monté coulissant dans une fente radiale 19 ménagée dans le plateau 1. L'articulation de chaque plot 16 sur le coulisseau correspondant s'effectue par l'intermédiaire d'un axe 20 dont la position sur ce plot est décalée par rapport à son plan transversal médian Z-Z'. Ce décalage est fonction du sens de rotation F1 de la couronne 2 et il est tel que la rotation de celle-ci provoque, dans une certaine position, le cabrage du coulisseau correspondant et par suite son coincement sur la piste 17. Pour faciliter ce coincement, les faces internes des deux parois de chaque plot 16 comportent avantageusement des parties en retrait 21a et 21b dont la disposition en quinconce de part et d'autre du plan transversal médian Z-Z', tient compte du sens de rotation prévu.

Le fonctionnement du présent variateur est le suivant :

Comme déjà indiqué, toute traction exercée sur le câble 12, a pour effet de modifier l'excentrement entre les deux éléments rotatifs 1 et 2. Lorsque ce câble est tiré à fond, le noyau 7 arrive en butée et il occupe une position centrée par rapport à l'axe de la roue, les deux axes X-X' et Y-Y' étant en coïncidence.

Dans cette position, les plots de coincement 16 sont tous placés sur la même circonférence. Etant donné qu'ils sont ainsi à égale distance de la roue, aucune vitesse différentielle n'apparait entre eux. En conséquence, le plateau mené 1 est entraîné à la même vitesse que la couronne 2 et le pignon denté 3 qui en est solidaire.

Un relachement du câble 12 provoque le retour du noyau 7 en position excentrée, et ce sous l'action du ressort de rappel 11. Cet excentrement provoque une variation continue des rayons sur lesquels évoluent les plots de coincement 16 par rapport au centre de la roue. Du fait de cet excentrement, les angles parcourus par ces plots deviennent différents. Il apparait donc une vitesse différentielle : l'angle $\alpha$ de conduite d'un plot 16 par rapport au centre de rotation $O_1$ du pignon menant 3 devient plus petit dans la zone où les plots 16 sont plus proches du centre $O_2$ de la roue. A cet endroit, l'angle $\alpha$ parcouru par le pignon denté 3 est plus faible que l'angle $\beta$ parcouru par le plateau 1 d'entraînement.

Il y a donc dans cette zone multiplication de la vitesse d'entrée et le facteur de multiplication est d'autant plus grand que l'excentrement est plus fort, et ce dans les limites permises par la construction. Or chaque plot 16 devient moteur à son tour pendant une partie de la trajectoire centrée autour du minimum de vitesse relative de ce plot. A ce sujet il faut noter qu'un plot sort de la zone de traction au moment précis où 1e plot suivant y pénètre, leur vitesse étant identique à cet instant.

Or, il est possible de faire varier le rapport de transmission de façon continue en modifiant l'excentrement E existant entre les axes X-X' et Y-Y' des deux éléments rotatifs du présent variateur.

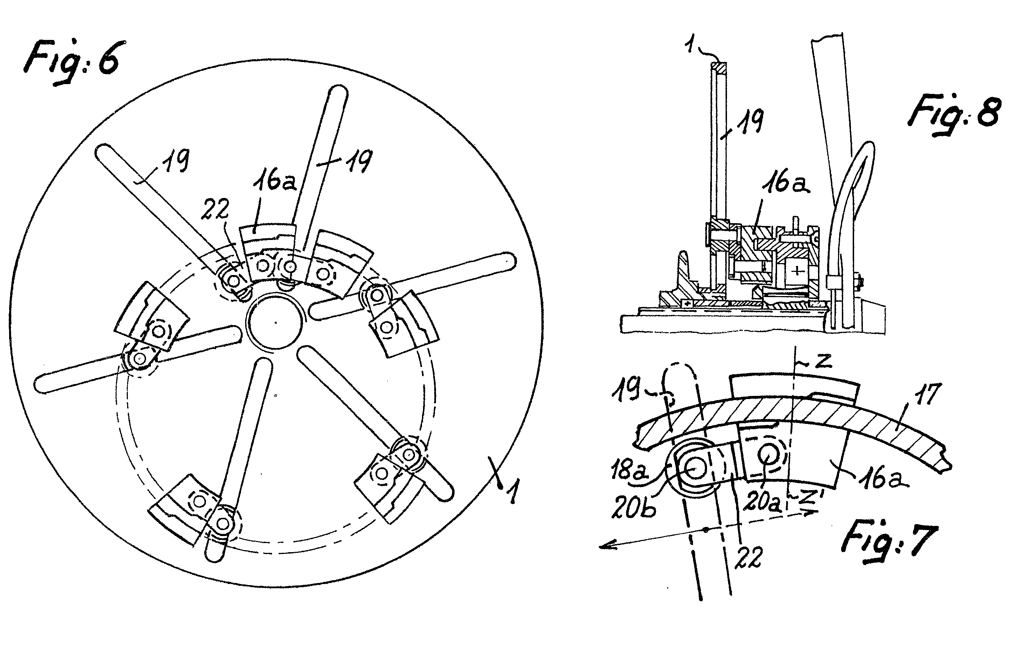

Les figures 6 et 7 illustrent une variante de réalisation dans laquelle chaque plot de coincement 16a s'articule sur le coulisseau correspondant 18a par l'intermédiaire d'une biellette de traction 22. L'une des extrémités de cette biellette s'articule au moyen d'un axe 20a sur le plot considéré 16a. Quant à l'extrémité opposée de cette biellette, elle s'articule sur le coulisseau 18a par l'intermédiaire d'un axe 20b. Là encore la position de l'axe 20a sur le plot 16a est décalée par rapport au plan transversal médian Z-Z' de celui-ci.

L'adjonction d'une telle biellette permet de compenser la différence des rayons d'action entre chaque plot de coincement et le coulisseau correspondant, car ceux-ci ne se déplacent pas sur la même circonférence. Ceci permet donc de réduire les frottement qui se produisent lorsqu'une telle biellette n'est pas prévue et que le plot de coincement s'articule directement sur le coulisseau correspondant, comme cela est le cas dans la première forme de réalisation décrite.

Du reste le variateur de vitesse selon l'invention n'est pas limité aux exemples décrits ci-dessus. Ainsi, au lieu d'être constitués par des cavaliers placés à cheval sur une piste circulaire, les plots de coincement pourraient être disposés à l'intérieur d'une gorge sur une piste circulaire, les plots de coincement pourraient être disposés à l'intérieur d'une gorge annulaire, l'agencement étant tel que chacun de ces plots puisse se coincer à l'intérieur de cette gorge pour réaliser le même effet que précédemment.

Comme déjà indiqué, le variateur représenté sur les dessins annexés est destiné à équiper la roue arrière d'une bicyclette. Cependant le variateur selon l'invention peut faire l'objet de nombreuses autres applications dans les domaines les plus divers. Par rapport aux variateurs connus du type général mentionné dans le préambule de la présente description. le variateur selon l'invention comporte de nombreux avantages. Le principal d'entre eux réside dans la grande résistance mécanique assurée par le fait que l'accouplement entre les organes rotatifs de transmission s'effectue par coincement sur une surface relativement importante. Un autre avantage résulte du fait qu'un tel accouplement par coincement peut se produire en un point quelconque de la piste circulaire portée par l'élément rotatif correspondant de transmission.

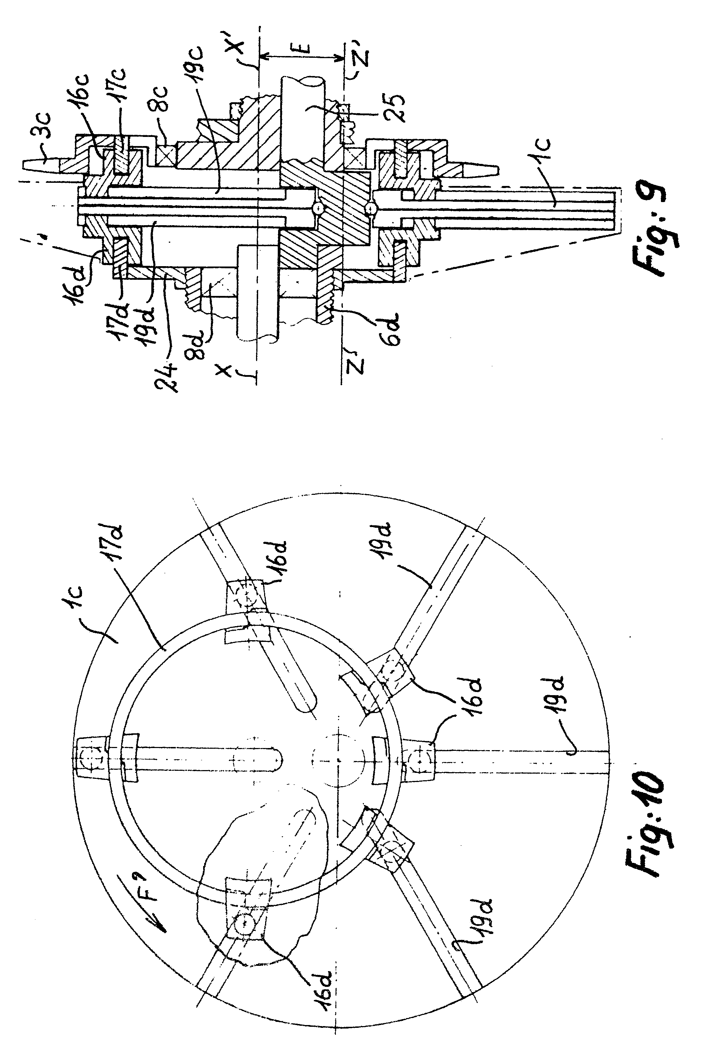

Les figures 8 et 9 représentent une autre forme de réalisation du variateur selon l'invention. Dans celle-ci, le dispositif correspondant constitue un variateur à double étage de multiplication.

Sur ces figures 8 et 9 les mêmes chiffres de référence affectés de l'indice "b" ou "c" ont été utilisés pour désigner des organes identiques ou similaires à certains des organes prévus dans les formes de réalisation précédentes.

Le premier étage du dispositif en cause comprend une piste circulaire 17c solidaire du pignon menant correspondant 3c, ces deux éléments étant montés rotatifs autour d'un axe XX' par l'intermédiaire d'un roulement 8c. Quant au second étage il comporte une autre piste circulaire 17d montée rotative autour du même axe XX' par l'intermédiaire d'un autre roulement 8d. Cette seconde piste est portée par un disque 24 fixé sur le moyeu 6d de la roue à entraîner.

Ces deux étages sont reliés entre eux par l'intermédiaire d'un plateau 1c monté rotatif autour d'un axe mobile ZZ' parallèle à l'axe XX'. Cette liaison est assurée au moyen de deux séries de plots de coincement 16c et 16d analogues au plots 16 prévus dans la forme de réalisation selon les figures 1 à 5, les plots 16c étant engagés sur la piste 17c, cependant que les plots 16d sont placés sur la piste 17d. Chacun de ces plots est porté par un coulisseau monté mobile dans une rainure diamétrale 19c ou 19d prévue sur l'une et l'autre faces du plateau 1c.

Lors de la rotation du pignon 3c, chaque plot 16c entraîne à tour de rôle le plateau 1c et ensuite chaque plot 16d entraîne à tour de rôle la piste 17d solidaire du moyeu 6d. Naturellement il convient que les deux séries de plots 16c et 16d soient adaptées à se coincer pour le même sens de rotation moteur F' des éléments du variateur. La variation du rapport de vitesse entre le pignon menant 3c et le moyeu mené 6d est réalisée en faisant varier la distance E entre les deux axes XX' et ZZ'. A cet effet le déplacement de l'axe mobile ZZ' du plateau 1c peut être commandé par rotation d'un vilebrequin 25. Tout en n'utilisant qu'un seul plateau 1c à rainures radiales, le présent dispositif constitue ainsi un variateur à deux étages dont l'arbre menant et l'arbre mené restent coaxiaux, quel que soit l'excentrement de ce plateau.

## Revendications

1. Variateur de vitesse comprenant deux éléments -respectivement menant et mené- montés rotatifs autour de deux axes parallèles dont l'un est déplaçable par rapport à l'autre, et qui sont reliés l'un à l'autre par des organes d'accouplement unidirectionnels aptes à agir l'un après l'autre à tour de rôle, lesquels sont portés par l'un des éléments rotatifs de transmission, tout en étant susceptibles d'être plus ou moins écartés de l'axe de celui-ci suivant l'excentrement de cet axe par rapport à l'autre, ce qui permet de faire varier le rapport de transmission de façon continue, caractérisé en ce que chacun des organes unidirectionnels d'accouplement consiste en un plot (16, 16a) apte à se coincer sur une piste circulaire (17), ou dans une gorge également circulaire, prévue sur l'un des éléments rotatifs (2) de transmission, ce plot étant monté articulé sur un coulisseau (18) lui-même monté coulissant dans une fente ou rainure diamétrale (19) ménagée dans l'autre élément rotatif (1) de transmission, l'agencement étant tel que sous l'effet de la rotation de l'élément menant les plots d'accouplement (16, 16a) viennent l'un après l'autre, à tour de rôle, en position de coincement.

2. Variateur de vitesse selon la revendication 1, caractérisé en ce que chacun des plots unidirectionnels de coincement (16a) s'articule sur le coulisseau correspondant (18a) par l'intermédiaire d'une biellette (22) d'accouplement.

3. Variateur de vitesse selon la revendication 1 ou 2, caractérisé en ce que la position de l'axe d'articulation de chaque plot de coincement (16, 16a) sur 1e coulisseau correspondant (18). ou sur la bielle intermédiaire d'accouplement (22), est décalée par rapport au plan transversal médian (Z-Z') du cavalier correspondant.

4. Variateur de vitesse selon l'une des revendications 1 à 3. caractérisé en ce que chaque plot de coincement (16, 16a) affecte la forme d'un cavalier de section en U placé à cheval sur la partie circulaire (17) de l'élément rotatif correspondant (2), les parois de ce cavaliers ayant une forme incurvée.

5. Variateur de vitesse selon la revendication 4, caractérisé en ce que la face interne des parois de chaque plot de coincement (16, 16a), en forme de cavalier, présentent des parties en retrait (21a, 21b) disposées en quinconce de part et d'autre du plan transversal médian (Z-Z') du cavalier correspondant.

6. Variateur de vitesse selon l'une des revendications 1 à 5, caractérisé en ce que l'élément rotatif de transmission, qui comporte une piste (17) ou gorge circulaire de réception des plots de coincement (16, 16a), consiste en une couronne (2) montée rotative autour d'un noyau circulaire (7) auquel est attelé un moyen d'actionnement, par exemple un câble de traction (12), permettant de provoquer l'excentration de ce noyau (7), et par suite de la couronne (2) par rapport à l'axe (X-X') de l'autre élément rotatif (1) de la transmission.

7. Variateur de vitesse selon la revendication 6, destiné à équiper la roue arrière d'un cycle, caractérisé en ce que la couronne rotative (2), avec laquelle coopèrent les plots de coincement (16, 16a), est solidaire du pignon (3) de réception de la chaîne (5) d'entraînement de la roue correspondante (4), cependant que l'autre élément rotatif de transmission consiste en un plateau (1) solidarisé en rotation avec le moyeu (6) de la roue, ce plateau comportant les fentes ou rainures radiales (19) assurant le guidage des coulisseaux (18, 18a) auxquels sont attelés les plots de coincement (16, 16a).

Fig.1

Fig:3

Fig:2

Fig: 5

Fig: 4

Fig: 6

Fig: 8

Fig: 7

EP 0 303 531 A2

Fig. 9

Fig. 10